# EUROPEAN PATENT SPECIFICATION

(11) **EP 2 840 741 B1**
(45) Date of publication and mention of the grant of the patent: **15.11.2017**
(21) Application number: 14192675.8
(22) Date of filing: 29.11.2010
(51) Int. Cl.: H04L 12/28, H04Q 9/00, H04L 29/06

(54) **Method and apparatus for using service of home network device based on remote access**
Verfahren und Vorrichtung zur Nutzung des Dienstes eines Heimnetzes auf Fernzugangsbasis
Procédé et appareil pour utiliser un service de dispositif de réseau domestique basé sur l'accès à distance

(30) Priority: 11.02.2010 KR 20100012906
(43) Date of publication of application: 25.02.2015
(62) Divisional of application: 10845860.5
(73) Proprietor: Samsung Electronics Co., Ltd., Gyeonggi-do 443-742 (KR)
(72) Inventor: Kim, Hong-Soo, Seoul 137-070 (KR); Lee, Jong-Ho, Seoul 150-936 (KR); Yang, Do-Jun, Gyeonggi-do 446-787 (KR); Kim, Tae-Jeoung, Gyeonggi-do 443-740 (KR); Kang, Min-Kyoung, Gyeonggi-do 443-803 (KR)
(74) Representative: Appleyard Lees IP LLP

(56) References cited:
- EP-A2- 1 926 252
- WO-A2-2011/028013
- US-A1- 2007 174 297
- US-A1- 2008 270 562
- US-A1- 2009 282 470

## Description

### Technical Field

Apparatuses and methods consistent with exemplary embodiments relate to using a service, and more particularly, to using a service provided by a home network device, based on remote access.

### Background Art

Due to the popularity of home networks, a personal computer (PC) network-oriented environment increasingly extends to an environment including home appliances using various lower network techniques. Therefore, universal plug and play (UPnP) technology has been proposed in order to network these home appliances in a unified manner by using an Internet Protocol (IP). However, UPnP technology supports mutual discovery and control between devices only in a home network. That is, in a related art, external devices of the home network cannot be connected to UPnP devices of the home network.

Therefore, UPnP remote access architecture has been proposed so as to allow the external devices of the home network to be connected to the UPnP devices. The UPnP remote access architecture defines a remote access server (RAS) within the home network, and a remote access client (RAC) capable of remotely accessing the RAS from outside the home network. Document WO 2011/028013 A2 discloses a system and method for providing a control user interface for controlling a network device with a remote controller.

### Solution to Problem

Exemplary embodiments provide a method and apparatus for using a service provided by a device of a home network, based on a remote access, and a computer readable recording medium having recorded thereon a program for executing the method.

### Advantageous Effects of Invention

According to the present invention, a remote client which does not have an user inferface can control a device of homenetwork based on an user interface recevice from a server.

### Brief Description of Drawings

The above and other aspects will become more apparent by describing in detail exemplary embodiments with reference to the attached drawings in which:
FIG. 1 shows a system using a service, according to an exemplary embodiment;
FIG. 2 is a flowchart of a method of using a service, according to an exemplary embodiment;
FIG. 3 is a block diagram of a client according to an exemplary embodiment;
FIG. 4 is a block diagram of a first server according to an exemplary embodiment; and
FIG. 5 is a block diagram of a second server according to an exemplary embodiment.

### Best Mode for Carrying out the Invention

According to an aspect of an exemplary embodiment, there is provided a method of using a service provided by a UPnP device of a home network, wherein the method is performed by a client located outside of the home network, the method including: receiving information regarding the service from a first server of the home network for providing a remote access of the client with respect to the UPnP device; transmitting the information regarding the service to a second server which manages at least one user interface (UI) for the remote access; receiving a UI for using the service from the second server; and transmitting a UPnP action request, related to the service, to the first server.

The method may further include: receiving a result of the UPnP action request from the first server; and changing a state of the UI based on the received result.

The information regarding the service may include an identifier of the service.

The UPnP action request related to the service may be a simple object access protocol (SOAP) message for requesting a UPnP action related to the service.

The client may be a remote access client according to a UPnP remote access (RA) protocol, and the first server may be a remote access server according to the UPnP RA protocol.

According to an aspect of another exemplary embodiment, there is provided a method of providing a remote access with respect to a service provided by a UPnP device of a home network, wherein the method is performed by a first server of the home network, the method including: transmitting information regarding the service to a client located outside of the home network; receiving a UPnP action request related to the service transmitted by the client based on a UI for using the service; and transmitting the UPnP action request to the UPnP device, wherein the UI is received by the client from a second server which manages at least one UI for the remote access based on the information regarding the service.

According to an aspect of another exemplary embodiment, there is provided an apparatus for using a service, wherein the apparatus is implemented in a client located outside of a home network and uses a service provided by a UPnP device of the home network, the apparatus including: a discovery unit which receives information regarding the service from a first server of the home network for providing remote access of the client with respect to the UPnP device; and a client unit which transmits the information regarding the service to a second server for managing at least one UI for the remote access, which receives a UI for using the service from the second server, and which transmits a UPnP action request related to the service based on the received UI to the first server.

According to an aspect of another exemplary embodiment, there is provided an apparatus for providing a remote access, wherein the apparatus is implemented in a first server of a home network and provides the remote access with respect to a service provided by a UPnP device of the home network, the apparatus including: a discovery unit which discovers the service of the UPnP device in the home network; and a server unit which transmits information regarding the service to a client located outside of the home network, which receives a UPnP action request related to the service transmitted by the client based on a UI for using the service, and which transmits the UPnP action request to the UPnP device, wherein the UI is received by the client from a second server for managing at least one UI for the remote access, based on the information regarding the service.

According to an aspect of another exemplary embodiment, there is provided a server for providing a UI for using a service provided by a UPnP device of a home network, the server including: a controller which receives information regarding the service from a network server of the home network, the information being used to match the service to the UI; and a database which stores the UI, wherein in response to receiving a request for the UI from a client located outside of the home network, the controller transmits the UI to the client for remotely using the service of the UPnP device.

According to an aspect of another exemplary embodiment, there is provided a computer readable recording medium having recorded thereon a program for executing at least one of the method of using a service and the method of providing remote access.

### Mode for the Invention

Hereinafter, exemplary embodiments will be described in detail with reference to the attached drawings in which like reference numerals refer to like elements throughout. Expressions such as "at least one of," when preceding a list of elements, modify the entire list of elements and do not modify the individual elements of the list.

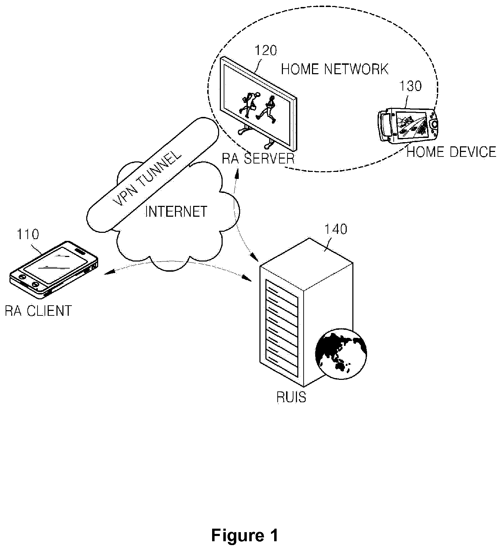

FIG. 1 shows a system using a service according to an exemplary embodiment. Referring to FIG. 1, a remote access client (RAC) 110 uses a service of a home device 130 through a remote access server (RAS) 120. The RAC 110 may correspond to an RAC according to UPnP remote access (RA). The RAS 120 may correspond to an RAS according to UPnP RA.

The RAS 120 and the RAC 110 synchronize a list of home devices connected to a home network and a list of services provided by the home devices with each other. The RAS 120 discovers the home devices 130 of the home network and the services provided by the home devices 130 through a control point of the home network, and transmits information regarding the discovered home devices 130 and the discovered services to the RAC 110. The RAC 110 may select and receive a service provided by the home device 130 according to the received information regarding the home devices 130 of the home network and the services provided by the home devices 130.

Remote access of the RAC 110 to the home device 130 may be performed through a virtual private network (VPN) tunnel based on an Internet network. The RAC 110 transmits a UPnP action request related to the selected service to the RAS 120 through the VPN tunnel, and the RAS 120 transmits the UPnP action request to the home device 130. When the home device 130 processes the UPnP action request, the result of processing the UPnP action request is transmitted to the RAC 110 through the RAS 120.

However, the RAC 110 may not include a user interface (UI) to use the service of the home device 130. For example, the home device 130 may be a device that is newly connected to the home network, and the RAC 110 may not include the UI to use a service of the newly connected home device 130.

In this case, even if the RAC 110 receives the information of the home device 130 and one or more services of the home device 130 from the RAS 120, since the RAC 110 does not include the UI for using a service of the home device 130, the RAC 110 may not use the service of the home device 130. Therefore, the system using a service according to the present exemplary embodiment may include a remote user interface server (RUIS) 140 for managing a UI to use the home device 130.

The RAC 110 may receive the UI to use the service of the home device 130 from the RUIS 140 by storing the UI to use the service of at least one device of the home network and installing the RUIS 140 in or outside of the home network.

The RUIS 140 receives information regarding the services provided by the devices 130 of the home network from the RAS 120. The RUIS 140 matches a service to a UI according to the received information, and stores the service and the UI in a database. Then, when the RAC 110 transmits the information regarding the service of the home device 130 to the RUIS 140 and requests the UI from the RUIS 140, the RUIS 140 provides the UI corresponding to the service of the home device 130 to the RAC 110 from among the stored at least one UI.

The RAC 110 receiving the UI transmits the UPnP action request related to the service based on the UI through the VPN tunnel to the RAS 120, and thus uses the service of the home device 130.

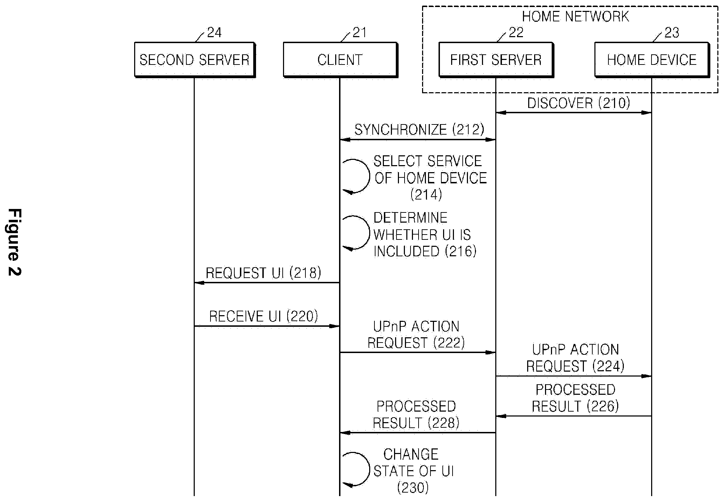

FIG. 2 is a flowchart of a method of using a service, according to an exemplary embodiment. Referring to FIG. 2, operations 210 through 212 are operations for discovering devices and services, and are performed by a process in which a client 21 and a first server 22 transmit and receive a predetermined message according to a remote access method defined in UPnP RA. The client 21 may correspond to an RAC 110 as a device remotely accessing a home device 23 of the home network, and the first server 22 may correspond to a RAS 120 based on UPnP RA as a device for providing remote access of the client 21.

In operation 210, the first server 22 discovers devices 23 of the home network and services provided by the devices 23. The devices 23 of the home network may be UPnP devices.

In the case of the home network according to UPnP, a control point of the home network may discover the devices 23 connected to the home network and the services provided by the devices 23. The control point may multicast a message for discovering the devices 23 and the services according to a simple service discovery protocol (SSDP), and the devices 23 receiving the message may transmit a response message in response to the message. Thus, the control point may discover the devices 23 and the services.

In addition, when a device is newly connected to the home network, since the device that is newly connected to the home network performs advertising of information regarding the device and a service in the home network, the control point may discover the device and its service according to the advertising.

The first server 22 may discover the home device 23 and the service of the home device 23 by collecting the information regarding the device 23 of the home network and one or more services thereof through the control point.

In operation 212, the first server 22 transmits the information regarding the device 23 of the home network and its service to the client 21. Even after the first server 22 transmits the information, the information regarding the device 23 and the service is synchronized by maintaining transmitting of changed information regarding the home network.

When a device is newly connected to the home network, or connection of a device that is already connected is finished, the first server 22 transmits information indicating such connection to the client 21 to synchronize the information regarding the device of the home network and one or more services thereof.

In operation 214, the client 21 selects a service of the home device 23, based on the synchronized information regarding the device 23 of the home network and one or more services thereof. The service of the device 23 is selected by an input of a user of the client 21.

In operation 216, the client 21 determines whether the client 21 includes a UI to use the service of the home device 23. As described with reference to FIG. 1, since the client 21 may not include the UI to use the home device 23, the client 21 determines whether the client 21 includes the UI required to use the service of the home device 23, in operation 216.

When it is determined that the client 21 does not include the UI, the client 21 requests, from a second server 24, the UI to use the service of the home device 23, in operation 218. The information regarding the service of the home device 23 is added to a UI request message, and is transmitted to the second server 24. The second server 24 is a server for managing at least one UI for supporting the remote access of the client 21.

The information regarding the service may include the kind of service provided by the home device 23 and an identifier of the service. The information regarding the service of the home device 23 from among the synchronized information regarding the devices and the services is included in the UI request message, and the UI request message is transmitted to the second server 24.

In operation 220, the second server 24 transmits the UI to use the service of the home device 23, which is requested by the client 21 in operation 218, to the client 21. In particular, the second server 24 receives information regarding at least one service available in the home network from the first server 22 of the home network. In addition, the second server 24 matches the information to at least one UI, and stores the information and the UI in a database.

In operation 218, when the client 21 transmits the message to request the UI, including the information regarding the service, the second server 24 discovers the UI corresponding to the service of the home device 23 with reference to the information regarding the service, included in the UI request message. When the UI corresponding to the service of the home device 23 exists, the discovered UI is transmitted to the client 21 in operation 220. When the UI corresponding to the service of the home device 23 does not exist, a warning message for indicating that the UI does not exist is transmitted to the client 21.

In operation 220, the UI transmitted to the client 21 may be a UI including at least one of an application, image, text, icon, text box, etc. for using the service of the home device 23, or may be a flash UI including a consumer electronic HTML (CE-HTML) document according to CEA-2104.

In operations 222 through 228, the client 21 uses the service of the home device 23, based on the UI received in operation 220. Specifically, the client 21 transmits a control message related to the service of the home device 23 to the first server 22 in operation 222, and receives a response, based on the UI, in operation 228. Operations 222 through 228 may be performed according to a remote access method defined in the UPnP RA. Thus, as described with reference to FIG. 1, in order to use a safe service, the control message related to the service may be transmitted, and a response may be received, through the VPN.

For example, if the service of the home device 23 is a multimedia streaming service, the client 21 requests the first server 22 for multimedia streaming, and receives streaming data in response to the request, through the VPN tunnel.

In more detail, in operation 222, the client 21 requests the first server 22 for a UPnP action related to the service related to the home device 23. The client 21 may transmit a message of the UPnP action request generated according to a simple object access protocol (SOAP) to the first server 22.

In operation 224, the first server 22 forwards the message of the UPnP action request received in operation 222 to the home device 23. In operation 226, the home device 23 transmits a result of processing the message of the UPnP action request received in operation 224 to the first server 22. For example, in operation 222, if the message of the UPnP action request transmitted from the client 21 to the first server 22 is a message requesting multimedia streaming, the home device 23 transmits multimedia data to the first server 22 in operation 226.

In operation 228, the first server 22 forwards the result received in operation 226 to the client 21. The client 21 receiving the result changes a state of the UI so as to reflect the result to the UI, in operation 230.

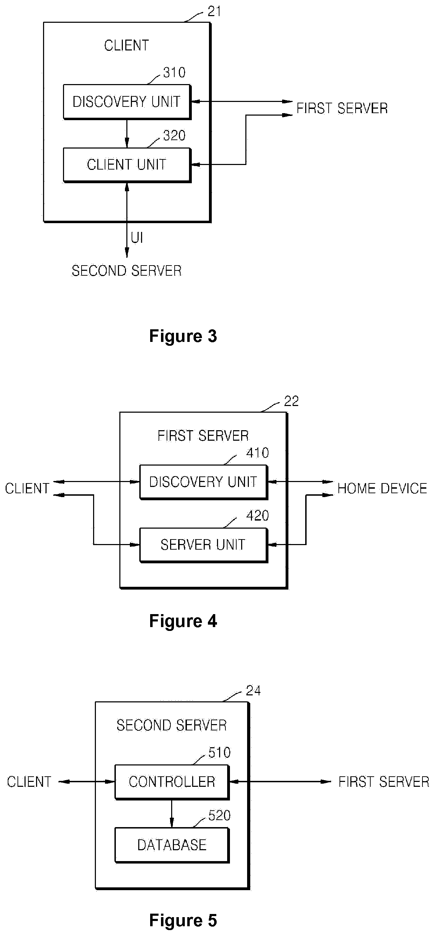

FIG. 3 is a block diagram of a client 21 according to an exemplary embodiment. Referring to FIG. 3, the client 21 includes a discovery unit 310 and a client unit 320. As described above with reference to FIG. 2, the client 21 may correspond to the RAC 110 based on the UPnP RA.

The discovery unit 310 receives the information regarding the device 23 of the home network and one or more services thereof from the first server 22. When a device is newly connected to the home network, or connection of a device that is already connected is finished, the discovery unit 310 receives information regarding such connection from the first server 22. The discovery unit 310 may correspond to a remote access discovery agent (RADA) unit of the RAC based on the UPnP RA.

The client unit 320 uses a service of the home device 23 according to information on the one or more services of the device 23, which is received by the discovery unit 310 from the first server 22.

If the home device 23 includes the UI to use the service, the client unit 320 uses the service of the home device 23 by transmitting the control message related to the service to the first server 22, based on the UI.

However, if the home device 23 does not include the UI to use the service of the home device 23, the client 21 requests, from the second server 24 which manages at least one UI for remote access, the UI to use the service, and receives the UI to use the service of the home device 23 in response to the request. In order to perform transmission/receipt and dynamic construction of the UI, the client unit 320 may include a remote access service agent for dynamically receiving the UI to use the service of the home network from the second server 24.

The client 21 transmits a UI request message including the information regarding the service of the home device 23 (e.g., a kind and identifier of the service) to the second server 24, and receives the UI corresponding to the service of the home device 23 from the second server 24 in response to the transmission.

The client unit 320 receiving the UI uses the service of the home device 23, based on the UI. The client unit 320 transmits a control message related to the service of the home device 23 to the first server 22, based on the UI. In more detail, a UPnP action request related to the service of the home device 23 is transmitted to the first server 22, and a result of processing the UPnP action request is received from the first server 22. The client unit 320 changes a state of the UI so as to reflect the result received from the first server 22 in the UI.

FIG. 4 is a block diagram of a first server 22 according to an exemplary embodiment. Referring to FIG. 4, the first server 22 includes a discovery unit 410 and a server unit 420. As described above with reference to FIG. 2, the first server 22 may correspond to the RAS 120 based on the UPnP RA.

The discovery unit 410 discovers the devices 23 of the home network and the services provided by the devices 23. As described above with reference to FIG. 2, the devices 23 of the home network and the services provided by the devices may be discovered through a control point that exists in the UPnP home network. The discovery unit 410 may correspond to the RADA of the RAS based on the UPnP RA.

When the devices 23 of the home network and the services provided by the devices are discovered, information regarding the devices 23 and the services is transmitted to the client 21. When a device is newly connected to the home network, or connection of a device that is already connected is finished, information regarding such connection is transmitted to the client 21.

The discovery unit 410 transmits information regarding the discovered service to the second server 24 so that the second server 24 may match the service to the UI corresponding to the service, and may store the service and the corresponding UI in a database.

The server unit 420 provides remote access of the client 21, and controls the home device 23. The server unit 420 receives the control message related to the service from the client 21, and forwards the received control message to the home device 23.

In more detail, the server unit 420 receives a message of a UPnP action request related to the service of the home device 23 from the client 21, and forwards the received message to the home device 23. The server unit 420 receives the result of the home device 23 receiving the message from the home device 23, and forwards the result to the client 21. The transmission and receipt of messages and results between the server unit 420 and the client 21 may be safely performed through the VPN tunnel.

FIG. 5 is a block diagram of a second server 24 according to an exemplary embodiment. Referring to FIG. 5, the second server 24 includes a controller 510 and a database 520.

The controller 510 receives information regarding at least one service available in the home network from the first server 22 that matches the service to a corresponding UI, and stores the service and the corresponding UI in the database 520.

Accordingly, when the controller 510 receives a request for the UI from the client 21, the client 21 is in remote access with the device 23 of the home network, and the controller 510 provides the UI to use the service in response to the request. The controller 510 receives the UI request message including the information regarding the service of the home device 23, which is to be used by the client 21, from the client 21, and searches the database 520, based on the information regarding the service included in the received UI request message.

When the UI corresponding to the information regarding the service is discovered in the database 520, the discovered UI is transmitted to the client 21. When the UI is not discovered, a warning message is transmitted to the client 21.

For example, a client and a server according to exemplary embodiments may include a bus coupled to the client 21, the first server 22 and the second server 24 shown in FIGs 3, 4 and 5, and at least one processor coupled to the bus. In addition, the client and the server may include a memory coupled to the bus for storing received messages or generated messages, and coupled to the at least one processor for performing the above-described instructions.

While not restricted thereto, exemplary embodiments can also be embodied as computer readable codes on a computer readable recording medium. The computer readable recording medium is any non-transitory data storage device that can store data which can be thereafter read by a computer system. Examples of the computer readable recording medium include read-only memory (ROM), random-access memory (RAM), CD-ROMs, magnetic tapes, floppy disks, optical data storage devices, etc. The computer readable recording medium can also be distributed over network coupled computer systems so that the computer readable code is stored and executed in a distributed fashion.

As described above, according to one or more exemplary embodiments, even a client outside a home network may use a service provided by a UPnP device within the home network, based on dynamic construction of a UI.Thus, even if a client does not include all the Uls for services of the UPnP device, the client may use the services, thereby improving use of the client and reducing manufacturing costs of the client.

While aspects and advantages have been particularly shown and described with reference to exemplary embodiments, it will be understood by those of ordinary skill in the art that various changes in form and details may be made therein without departing from the scope of the inventive concept as defined by the following claims.

## Claims

1. A method of using a service provided by a device of a home network, wherein the method is performed by a client located outside of the home network, the method comprising:
receiving information regarding the service of the device from a first server providing a remote access with respect to the service provided by the device of the home network; receiving a user interface, UI, for using the service from a second server based on the information regarding the service when the UI does not exist in the client; and
transmitting to the first server a request related to the service of the device.

2. The method of claim 1, further comprising:
receiving a result of the request from the first server; and
changing a state of the UI based on the received result.

3. The method of claim 1, wherein the information regarding the service of the device is received when at least the device of the home network and at least the service of the device is changed and the information regarding the service of the device comprises an identifier of the service.

4. The method of claim 1, wherein the request related to the service is a simple object access protocol (SOAP) message for requesting a action related to the service.

5. The method of claim 1, wherein:
the client located outside of the home network is a remote access client according to a remote access (RA) protocol; and the first server is a remote access server according to the RA protocol.

6. The method of claim 1, further comprising:
transmitting the information regarding the service to the second server which manages at least
one UI for the remote access;
receiving the UI from the second server if the UI exists; and
receiving a warning message from the second server if the UI does not exist.

7. A method of providing a remote access with respect to a service provided by a device of a home network, wherein the method is performed by a first server of the home network, the method comprising:
transmitting information regarding the service of the device to a client located outside of the home network; receiving a request related to the service by the client based on a user interface, UI, for using the service; and
transmitting the request to the device,
wherein the UI for using the service is received by the client from a second server based on the information regarding the service when the UI does not exist in the client.

8. The method of claim 7, wherein the information is transmitted to the client when at least the device of the home network and at least the service of the device is changed and the UI is received by the client from the second server which manages at least one UI for the remote access.

9. The method of claim 7, wherein the request is a simple object access protocol (SOAP) message for requesting a action related to the service.

10. The method of claim 7, wherein:
the client located outside of the home network is a remote access client according to a remote access (RA) protocol; and the first server is a remote access server according to the RA protocol.

11. An apparatus for using a service, wherein the apparatus is implemented in a client located outside of a home network and the service is provided by a device of the home network, the apparatus comprising:
a discovery unit which receives information regarding the service of the device from a first server providing a remote access with respect to the service provided by the device of the home network; and
a client unit which receives a user interface, UI, for using the service from a second server abased on the information regarding the service when the UI does not exist in the client and transmits a request, related to the service to the first server.

12. The apparatus of claim 11, wherein the client unit receives a result of the request from the first server, and changes a state of the UI based on the received result.

13. An apparatus for providing a remote access, wherein the apparatus is implemented in a first server of a home network and the remote access is with respect to a service provided by a device of the home network, the apparatus comprising:
a discovery unit which discovers the service of the device in the home network; and
a server unit which transmits information regarding the service of the device to a client located outside of the home network, which receives a request related to the service transmitted by the client based on a UI for using the service, and which transmits the request to the device,
wherein the UI for using the service is received by the client from the second server based on the information regarding the service when the UI does not exist in the client.

14. The apparatus of claim 13, wherein the UI is received by the client from the second server which manages at least one UI for the remote access if the UI of the service does not exist.

15. A computer readable recording medium having recorded thereon a program for executing the method of one of claims 1 through 10.

## Patentansprüche

1. Verfahren zur Nutzung eines von einem Gerät eines Heimnetzes bereitgestellten Dienstes, wobei das Verfahren von einem außerhalb des Heimnetzes befindlichen Client durchgeführt wird, wobei das Verfahren umfasst:
Empfangen von Informationen zum Dienst des Gerätes aus einem ersten Server, der einen Fernzugang in Bezug auf den vom Gerät des Heimnetzes bereitgestellten Dienst bereitstellt;
Empfangen einer Anwenderschnittstelle, UI, für die Nutzung des Dienstes aus einem zweiten Server auf der Basis der Informationen zum Dienst, wenn die UI im Client nicht existiert; und
Übertragen einer den Dienst des Gerätes betreffenden Anforderung an den ersten Server.

2. Verfahren nach Anspruch 1, das ferner umfasst:
Empfangen eines Resultates der Anforderung aus dem ersten Server; und
Ändern eines Zustands der UI auf der Basis des empfangenen Resultates.

3. Verfahren nach Anspruch 1, wobei die Informationen zum Dienst des Gerätes empfangen werden, wenn wenigstens das Gerät des Heimnetzes und wenigstens der Dienst des Gerätes geändert wird und die Informationen zum Dienst des Gerätes eine Kennung des Dienstes umfassen.

4. Verfahren nach Anspruch 1, wobei die den Dienst betreffende Anforderung eine Simple-Object-Access-Protocol-(SOAP)-Nachricht zum Anfordern einer den Dienst betreffenden Aktion ist.

5. Verfahren nach Anspruch 1, wobei:
der außerhalb des Heimnetzes befindliche Client ein Fernzugangsclient gemäß einem Fernzugangs-(RA)-Protokoll ist; und der erste Server ein Fernzugangsserver gemäß dem RA-Protokoll ist.

6. Verfahren nach Anspruch 1, das ferner umfasst:
Übertragen der Informationen zum Dienst an den zweiten Server, der wenigstens eine UI für den Fernzugang verwaltet;
Empfangen der UI aus dem zweiten Server, falls die UI existiert; und
Empfangen einer Warnmeldung aus dem zweiten Server, falls die UI nicht existiert.

7. Verfahren zum Bereitstellen eines Fernzugangs in Bezug auf einen von einem Gerät eines Heimnetzes bereitgestellten Dienst, wobei das Verfahren von einem ersten Server des Heimnetzes durchgeführt wird, wobei das Verfahren umfasst:
Übertragen von Informationen zum Dienst des Gerätes an einen außerhalb des Heimnetzes befindlichen Client;
Empfangen einer den Dienst betreffenden Anforderung vom Client auf der Basis einer Anwenderschnittstelle, UI, für die Nutzung des Dienstes; und
Übertragen der Anforderung an das Gerät,
wobei die UI für die Nutzung des Dienstes vom Client aus einem zweiten Server auf der Basis der Informationen zum Dienst empfangen wird, wenn die UI im Client nicht existiert.

8. Verfahren nach Anspruch 7, wobei die Informationen an den Client übertragen werden, wenn wenigstens das Gerät des Heimnetzes und wenigstens der Dienst des Gerätes geändert wird und die UI vom Client aus dem zweiten Server empfangen wird, der wenigstens eine UI für den Fernzugang verwaltet.

9. Verfahren nach Anspruch 7, wobei die Anforderung eine Simple-Object-Access-Protocol-(SOAP)-Nachricht zum Anfordern einer den Dienst betreffenden Aktion ist.

10. Verfahren nach Anspruch 7, wobei:
der außerhalb des Heimnetzes befindliche Client ein Fernzugangsclient gemäß einem Fernzugangs-(RA)-Protokoll ist; und der erste Server ein Fernzugangsserver gemäß dem RA-Protokoll ist.

11. Vorrichtung zum Nutzen eines Dienstes, wobei die Vorrichtung in einem außerhalb eines Heimnetzes befindlichen Client implementiert ist und der Dienst von einem Gerät des Heimnetzes bereitgestellt wird, wobei die Vorrichtung umfasst:
eine Discovery-Einheit, die Informationen zum Dienst des Gerätes aus einem ersten Server empfängt, der einen Fernzugang in Bezug auf den vom Gerät des Heimnetzes bereitgestellten Dienst bereitstellt; und
eine Client-Einheit, die eine Anwenderschnittstelle, UI, für die Nutzung des Dienstes aus einem zweiten Server auf der Basis der Informationen zum Dienst empfängt, wenn die UI im Client nicht existiert, und eine den Dienst betreffende Anforderung an den ersten Server überträgt.

12. Vorrichtung nach Anspruch 11, wobei die Client-Einheit ein Resultat der Anforderung aus dem ersten Server empfängt und auf der Basis des empfangenen Resultates einen Zustand der UI ändert.

13. Vorrichtung zum Bereitstellen eines Fernzugangs, wobei die Vorrichtung in einem ersten Server eines Heimnetzes implementiert ist, und der Fernzugang sich auf einen von einem Gerät des Heimnetzes bereitgestellten Dienst bezieht, wobei die Vorrichtung umfasst:
eine Discovery-Einheit, die den Dienst des Gerätes im Heimnetz lokalisiert; und
eine Server-Einheit, die Informationen zum Dienst des Gerätes an einen außerhalb des Heimnetzes befindlichen Client überträgt, die eine vom Client übertragene, den Dienst betreffende Anforderung auf der Basis einer UI für die Nutzung des Dienstes empfängt, und die die Anforderung an das Gerät überträgt,
wobei die UI für die Nutzung des Dienstes vom Client auf der Basis der Informationen zum Dienst aus dem zweiten Server empfangen wird, wenn die UI im Client nicht existiert.

14. Vorrichtung nach Anspruch 13, wobei die UI vom Client aus dem zweiten Server empfangen wird, der wenigstens eine UI für den Fernzugang verwaltet, falls die UI des Dienstes nicht existiert.

15. Computerlesbares Aufzeichnungsmedium, auf dem ein Programm zum Ausführen des Verfahrens nach einem der Ansprüche 1 bis 10 aufgezeichnet ist.

## Revendications

1. Procédé d'utilisation d'un service fourni par un dispositif d'un réseau domestique, lequel procédé est exécuté par un client situé à l'extérieur du réseau domestique, le procédé consistant à :
recevoir des informations concernant le service du dispositif depuis un premier serveur fournissant un accès distant par rapport au service fourni par le dispositif du réseau domestique ;
recevoir une interface d'utilisateur UI pour utiliser le service depuis un second serveur en fonction des informations concernant le service lorsque l'UI n'existe pas chez le client ; et
transmettre au premier serveur une demande concernant le service du dispositif.

2. Procédé selon la revendication 1, consistant en outre à :
recevoir un résultat de la demande depuis le premier serveur ; et
changer un statut de l'UI en fonction du résultat reçu.

3. Procédé selon la revendication 1, dans lequel les informations concernant le service du dispositif sont reçues lorsqu'au moins le dispositif du réseau domestique et au moins le service du dispositif est changé, et les informations concernant le service du dispositif comprennent un identifiant du service.

4. Procédé selon la revendication 1, dans lequel la demande concernant le service est un message de protocole d'accès d'objet simple (SOAP) pour demander une action concernant le service.

5. Procédé selon la revendication 1, dans lequel le client situé à l'extérieur du réseau domestique est un client d'accès distant en fonction d'un protocole d'accès distant (RA) et le premier serveur est un serveur d'accès distant en fonction du protocole RA.

6. Procédé selon la revendication 1, consistant en outre à :
transmettre les informations concernant le service au second serveur qui gère au moins une UI pour l'accès distant ;
recevoir l'UI du second serveur si l'UI existe ; et
recevoir un message d'avertissement du second serveur si l'UI n'existe pas.

7. Procédé pour fournir un accès distant par rapport à un service fourni par un dispositif d'un réseau domestique, lequel procédé est exécuté par un premier serveur du réseau domestique, le procédé consistant à :
transmettre des informations concernant le service du dispositif à un client situé à l'extérieur du réseau domestique ;
recevoir une demande concernant le service par le client en fonction d'une interface d'utilisateur UI pour utiliser le service ; et
transmettre la demande au dispositif,
dans lequel l'UI pour utiliser le service est reçue par le client depuis un second serveur en fonction des informations concernant le service lorsque l'UI n'existe pas chez le client.

8. Procédé selon la revendication 7, dans lequel les informations sont transmises au client lorsqu'au moins le dispositif du serveur domestique et au moins le service du dispositif est changé et l'UI est reçue par le client depuis le second serveur qui gère au moins une UI pour l'accès distant.

9. Procédé selon la revendication 7, dans lequel la demande est un message de protocole d'accès d'objet simple (SOAP) pour demander une action concernant le service.

10. Procédé selon la revendication 7, dans lequel le client situé à l'extérieur du réseau domestique est un client d'accès distant en fonction d'un protocole d'accès distant (RA) et le premier serveur est un serveur d'accès distant en fonction du protocole RA.

11. Appareil pour utiliser un service, dans lequel l'appareil est mis en oeuvre chez un client situé à l'extérieur d'un réseau domestique et le service est fourni par un dispositif du réseau domestique, l'appareil comprenant :
une unité de découverte qui reçoit des informations concernant le service du dispositif depuis un premier serveur fournissant un accès distant par rapport au service fourni par le dispositif du réseau domestique ; et
une unité client qui reçoit une interface d'utilisateur UI pour utiliser le service depuis un second serveur en fonction des informations concernant le service lorsque l'UI n'existe pas chez le client, et transmet une demande concernant le service au premier serveur.

12. Appareil selon la revendication 11, dans lequel l'unité client reçoit un résultat de la demande depuis le premier serveur, et change un statut de l'UI en fonction du résultat reçu.

13. Appareil pour fournir un accès distant, lequel appareil est mis en oeuvre dans un premier serveur d'un réseau domestique et l'accès distant se fait par rapport à un service fourni par un dispositif du réseau domestique, l'appareil comprenant :
une unité de découverte qui découvre le service du dispositif dans le réseau domestique ; et
une unité de serveur qui transmet des informations concernant le service du dispositif à un client situé à l'extérieur du réseau domestique, qui reçoit une demande concernant le service transmise par le client en fonction d'une UI pour utiliser le service et qui transmet la demande au dispositif ;
dans lequel l'UI pour utiliser le service est reçue par le client depuis le second serveur en fonction des informations concernant le service lorsque l'UI n'existe pas chez le client.

14. Appareil selon la revendication 13, dans lequel l'UI est reçue par le client depuis le second serveur qui gère au moins une UI pour l'accès distant si l'UI du service n'existe pas.

15. Support d'enregistrement lisible par ordinateur sur lequel est enregistré un programme pour exécuter le procédé selon l'une des revendications 1 à 10.
